# EUROPÄISCHE PATENTSCHRIFT

(11) **EP 2 822 814 B1**
(45) Veröffentlichungstag und Bekanntmachung des Hinweises auf die Patenterteilung: **10.05.2017**
(21) Anmeldenummer: 13709149.2
(22) Anmeldetag: 06.03.2013
(51) Int. Cl.: B60R 1/12

(54) **KRAFTFAHRZEUG MIT EINEM ELEKTRONISCHEN RÜCKSPIEGEL**
MOTOR VEHICLE WITH AN ELECTRONIC REAR VIEW MIRROR
VÉHICULE AUTOMOBILE AVEC UN RÉTROVISEUR ÉLECTRONIQUE

(30) Priorität: 07.03.2012 DE 102012004640
(43) Veröffentlichungstag der Anmeldung: 14.01.2015
(73) Patentinhaber: Audi AG, 85045 Ingolstadt (DE)
(72) Erfinder: HEINEMANN, Patrick, 85092 Kösching (DE); REICH, Andreas, 85114 Buxheim (DE); PARVANTA, Tareq, 67657 Kaiserslautern (DE)
(74) Vertreter: Brandt, Kai
(86) Internationale Anmeldenummer: PCT/EP2013/000633
(87) Internationale Veröffentlichungsnummer: WO 2013/131635

(56) Entgegenhaltungen:
- DE-A1-102009 059 869
- DE-A1-102010 025 354
- US-A1- 2010 201 817
- US-A1- 2011 001 614
- US-A1- 2011 166 782

## Beschreibung

Die Erfindung betrifft ein Kraftfahrzeug, umfassend wenigstens einen elektronischen Rückspiegel, insbesondere einen Außen- und/oder Seitenspiegel, der eine Anzeigevorrichtung, insbesondere ein Display, für von einer insbesondere außerhalb des Kraftfahrzeugs vorgesehenen Außenkamera aufgenommene Bilder aufweist.

Im Stand der Technik wurden elektronische Rückspiegel, insbesondere elektronische Außenspiegel und/oder Seitenspiegel, bereits vorgeschlagen. Bei dieser Art von Außenspiegeln ist ein virtueller Spiegel vorgesehen, das bedeutet, statt einer Spiegelfläche wird eine Anzeigevorrichtung, insbesondere ein Display, verwendet, die Daten, die von einer insbesondere im Außenspiegel selbst angeordneten Außenkamera aufgenommen werden, darstellt. Allerdings sind auch Ausgestaltungen bekannt, bei denen die Anzeigevorrichtung im Innenraum des Kraftfahrzeugs, beispielsweise im Bereich der A-Säule, angeordnet ist. Dabei sind allgemeine Systeme bekannt, bei denen für das auf der Anzeigevorrichtung dargestellte Bild ein fest definierter (Kamera-) Blickwinkel vorgesehen ist.

Jedoch wurden inzwischen auch Systeme vorgeschlagen, die beispielsweise eine Verstellung der Kamera erlauben. Dabei wird eine Schwenkeinrichtung verwendet, die es ermöglicht, eine Neigungs- beziehungsweise Winkelnachführung des Kamerasystems zu erlauben, um eine Spiegelnachstellung zu ersetzen.

In der nachveröffentlichten Patentanmeldung DE 10 2011 118 253.9 der Anmelderin wurde zudem vorgeschlagen, dass die insbesondere als Weitwinkelkamera ausgebildete Außenkamera einen größeren Bereich aufnimmt und nur ein durch einen Benutzer und/oder automatisch einstellbarer kleinerer Bildausschnitt eines durch die Außenkamera aufgenommenen Bildes auf der Anzeigevorrichtung dargestellt wird. Dort wird also ein Bildausschnitt des Kamerabildes angezeigt, der durch den Benutzer oder situationsabhängig ausgewählt werden kann.

Dokument US 2011/0001614 A1 betrifft ein Rückwärtsfahr-Assistenzsystem mit einem Touchscreen-Display, das sich konkret mit der assistierten Verbindung einer Anhängerkupplung mit einem Anhänger beschäftigt. Um die Unterstützung durch zusätzliche Symbole im dargestellten Bild der Rückfahrkamera zu erlauben, muss erst die Anhängerkupplung des Anhängers im Bild der Kamera identifiziert werden. Um dies zu ermöglichen, wird dort vorgeschlagen, ein Zoom-Fenster über das Gesamtbild zu legen, welches durch den Fahrer manuell mittels des Touchscreen-Displays verschoben werden kann, so dass das Zoom-Fenster über dem Trailer positioniert wird. Der Inhalt des Zoom-Fensters wird dann vergrößert, so dass ein Zielicon an der Position der Anhängerkupplung des Trailers gesetzt werden kann, wonach wieder zur vorherigen Ansicht zurückgekehrt wird.

Sowohl eine Verschwenkung der Kamera als auch eine Auswahl eines Bildausschnitts können also einen Fahrer die Möglichkeit geben, den im Spiegel dargestellten Blickwinkel zu verändern, sei es durch die mechanische Verschwenkung der Kamera oder durch die Auswahl eines bestimmten Bildausschnitts. Auch eine automatische Verstellung des Blickwinkels wurde bereits vorgeschlagen, wobei eine automatische Änderung in manchen Situationen eher unerwünscht sein kann. In diesen Situationen ist eine Fahrer-Interaktion nötig.

Während eine Spiegelfläche eines herkömmlichen Rückspiegels eine feste Einheit ohne viele Freiheitsgrade zu deren Einstellung darstellt, existieren diese mithin bei einer Anzeigevorrichtung durchaus, nicht nur bezüglich des Bildausschnitts bzw. der Verschwenkung der Kamera, sondern auch bezüglich anderer Darstellungsparameter. Nachdem sich mit elektronischen Rückspiegeln auch Fahrerassistenzsysteme kombinieren lassen, die dann beispielsweise Einblendungen vornehmen, wird die Zahl der Einstellungsmöglichkeiten, auf die ein Fahrer gegebenenfalls Einfluss nehmen möchte, noch erhöht.

Der Erfindung liegt daher die Aufgabe zugrunde, eine konkrete, vorteilhafte und für den Fahrer einfach verständliche Möglichkeit zur Bedienung eines elektronischen Rückspiegels, insbesondere bezüglich des Blickwinkels, anzugeben.

Zur Lösung dieser Aufgabe ist ein Kraftfahrzeug nach Anspruch 1 vorgesehen.

Die Erfindung schlägt also vor, in einem derartigen Kamera-Monitor-System, also einem elektronischen Rückspiegel, ein insbesondere multitouchfähiges berührungssensitives Display einzusetzen. Dies ermöglicht eine Vielzahl von Interaktionsmöglichkeiten für den Fahrer, die besonders intuitiv erlernbar und verständlich sind, worauf im Folgenden noch näher eingegangen werden wird.

Touchscreens, wie sie im Rahmen der vorliegenden Erfindung verwendet werden, sind im Stand der Technik bereit weitgehend bekannt. Diese weisen der Darstellungsfläche zugeordnet eine ortsauflösende Sensorik auf, die eine Berührung der Darstellungsfläche, insbesondere wenigstens eine Berührung durch einen Finger, ortsgenau detektieren kann. So wird es ermöglicht, mit auf dem Touchscreen dargestellten Inhalten zu interagieren.

Besonders bevorzugt wird dabei ein multitouchfähiges Display verwendet, das bedeutet, die Sensorik ist dazu ausgebildet, an verschiedenen Orten gleichzeitig stattfindende Berührungen, insbesondere durch einen Finger, zu detektieren, so dass nicht nur durch einen Finger durchzuführende Gesten und Berührungen nachverfolgt werden können, sondern auch komplexere, zwei oder mehr Finger benötigende Bedienhandlungen durchgeführt werden können.

Insbesondere ist also eine dem Touchscreen zugeordnete Steuereinrichtung dazu ausgebildet, auch Bewegungen und/oder Gesten, die auf der berührungssensitiven Darstellungsfläche durch die Sensorik aufgenommen werden, zu ermitteln und korrekt auszuwerten.

In konkreter Ausgestaltung der vorliegenden Erfindung kann vorgesehen sein, dass eine Steuereinrichtung zur Steuerung des elektronischen Rückspiegels, insbesondere einer Verschwenkungseinrichtung der Außenkamera und/oder einer Bildverarbeitungseinrichtung zur Auswahl des darzustellenden Bildausschnitts, in Abhängigkeit einer über den Touchscreen erfolgten Eingabe vorgesehen ist. Sollen weitere Bedienmöglichkeiten gegeben sein, kann ferner vorgesehen sein, dass die Steuereinrichtung auch zur Steuerung weiterer Fahrzeugsysteme in Abhängigkeit einer über den Touchscreen erfolgten Eingabe ausgebildet ist. Die in dem Touchscreen sensierten und insbesondere vorausgewerteten Eingaben werden mithin ausgewertet, um hieraus Steuerparameter und/oder Steuerbefehle zur Steuerung des elektronischen Außenspiegels im Hinblick auf den Blickwinkel (und ggf. weitere Parameter) und/oder wenigstens eines weiteren Fahrzeugsystems zu erzeugen, so dass mithin über den Touchscreen eine intuitive Einstellung möglicher Parameter erfolgen kann.

Dabei ist es erfindungsgemäß besonders bevorzugt, wenn mit einem Bildausschnitt eines größeren Bildes gearbeitet wird, da sich hier besonders vorteilhafte Möglichkeiten nicht allein dadurch ergeben, dass die neue Darstellung des neuen Bildausschnitts sofort erfolgen kann, nachdem ja bereits Bilddaten ohne eine mechanische Verschwenkung vorliegen, sondern zudem Einstellungsvarianten und Gestiken verwendet werden können, die dem Fahrer oder sonstigen Benutzer auch aus andere Bereichen bekannt sind, wo mit Touchscreens gearbeitet wird, beispielsweise bei den sogenannten "Smartphones". In einem solchen Fall, in dem nur ein Bildausschnitt angezeigt wird, kann besonders vorteilhaft eine Weitwinkel-Außenkamera verwendet werden, um möglichst große Bereiche des Umfelds zu erfassen.

Es ist hierbei vorgesehen, dass der Bildausschnitt innerhalb des Bildes durch Berühren des Touchscreens an einer Stelle und berührendes Bewegen eines Fingers verschiebbar ist. Diese Veränderung des angezeigten Bildausschnitts ist auch unter dem Namen "Panning" bekannt und stellt eine auch bei elektronischen Rückspiegeln vorteilhafte, intuitive Bedienmöglichkeit dar.

Mit besonderem Vorteil kann ferner vorgesehen sein, dass eine Vergrößerungsstufe des Bildausschnitts durch Ansetzen zweier Finger auf dem Touchscreen und eine Veränderung des Abstands der Finger während der Berührung einstellbar ist. Auch eine solche Art zu "zoomen" ist dem Benutzer bereits von anderen Anwendungen bekannt, so dass letztlich, insbesondere gemeinsam mit dem Panning, durch simple Gesten eine einfache Einstellung des gewünschten Bildausschnitts inklusive der Zoomgröße (Vergrößerungsstufe) gegeben ist. So ist es einem Fahrer beispielsweise möglich, als Bildausschnitt beim Einparken auf eine Felge zu zoomen oder dergleichen.

Besonders vorteilhaft ist es jedoch auch, wenn der Touchscreen auch zur Einstellung weiterer Parameter genutzt werden kann.

In einer vorteilhaften Ausgestaltung der vorliegenden Erfindung kann vorgesehen sein, dass zusätzlich wenigstens ein weiterer Darstellungsparameter der Anzeigevorrichtung, insbesondere die Helligkeit und/oder der Kontrast und/oder ein Farbparameter, über den Touchscreen einstellbar ist. Es ist also beispielsweise denkbar, dass bezüglich dem optischen Eindruck des auf dem Display dargestellten Bildes Darstellungsparameter direkt über den Touchscreen an der Anzeigevorrichtung einstellbar sind. Der Fahrer kann das Bild heller oder dunkler stellen, den, Kontrast wählen und auch weitere gängige Parameter, insbesondere farbbezogene Parameter, einstellen. Dabei kann in zweckmäßiger Ausgestaltung der vorliegenden Erfindung vorgesehen sein, dass die Steuereinrichtung zur Einblendung eines Schiebereglers für den Darstellungsparameter auf der Anzeigevorrichtung ausgebildet ist. Nach Anwahl einer bestimmten Einstellungsmöglichkeit, was über ein Menü, eine bestimmte Geste und/oder ein dargestelltes Bedienelement erfolgen kann, wird auf der Darstellungsfläche des Touchscreens mithin ein Schieberegler eingeblendet, der beispielsweise durch Berührung an der Stelle des Schiebereglers ergriffen und manipuliert werden kann, um den Darstellungsparameter einzustellen. Selbstverständlich sind auch andere Möglichkeiten denkbar, den Darstellungsparameter einstellbar zu machen, beispielsweise mit "+" und/oder "-" bezeichnete, auf der Darstellungsfläche eingeblendete Bedienelemente, die entsprechend eine Erhöhung bzw. Erniedrigung des Darstellungsparameters auslösen, wenn dort eine Berührung sensiert wird.

In weiterer Ausgestaltung der vorliegenden Erfindung kann vorgesehen sein, dass zusätzlich wenigstens ein Betriebsparameter wenigstens eines die Anzeigevorrichtung zur Ausgabe einer Information und/oder Warnung nutzenden Fahrzeugsystems, insbesondere Fahrerassistenzsystems, in Abhängigkeit einer Eingabe auf dem Touchscreen einstellbar ist. Nutzt also ein weiteres Fahrzeugsystem die Anzeigevorrichtung mit, beispielsweise um eine Warnung und/oder einen Hinweis auszugeben, ist es auf eine besonders intuitive Art und Weise möglich, an einem Ort, den der Fahrer ohnehin mit der Funktion des Fahrzeugsystems assoziiert, nämlich der Anzeigevorrichtung, unmittelbar auch eine Einstellung von Betriebsparametern des Fahrzeugsystems über den Touchscreen zu ermöglichen. Konkret kann dabei als Fahrerassistenzsystem ein Spurwechselassistenzsystem und/oder ein Totwinkelassistenzsystem und/oder eine Einparkhilfe und/oder ein Rückwärtsfahrtassistenzsystem vorgesehen sein. Derartige Systeme bieten Assistenzfunktionen an, die ohnehin in näherem Zusammenhang zum Rückraum des Kraftfahrzeugs bzw. dem elektronischen Rückspiegel stehen.

In zweckmäßiger Weiterbildung der Erfindung kann zusätzlich wenigstens eine in das Bild eingeblendete, auf der Anzeigevorrichtung dargestellte Zusatzinformation durch Interaktion am Darstellungsort der Zusatzinformation in der Darstellung konfigurierbar sein, insbesondere verschiebbar sein. Wird mithin eine Zusatzinformation, beispielsweise eine Warnung und/oder ein Hinweis eines Fahrerassistenzsystems, angezeigt, kann eine direkte Interaktion mit der dargestellten Zusatzinformation erfolgen, beispielsweise, indem diese an einen anderen Darstellungsort verschoben werden kann oder sich kontextsensitiv bei Berührung ein der Zusatzinformation und/oder dem Fahrerassistenzsystem zugeordnetes Menü zur Einstellung weiterer Darstellungsparameter und/oder Betriebsparameter des Fahrerassistenzsystems öffnen. Eine derartige Zusatzinformation kann beispielsweise eine Abstandsmessung zu einem hinter dem Kraftfahrzeug befindlichen Objekt bei einer Rückwärtsfahrt oder dergleichen betreffen.

Wie bereits erwähnt wurde, kann zweckmäßigerweise vorgesehen sein, dass die Steuereinrichtung zur Darstellung wenigstens eines insbesondere kontextsensitiven, durch den Touchscreen bedienbaren Menüs auf der Anzeigevorrichtung ausgebildet ist. Insbesondere also abhängig davon, wo das Menü durch eine Berührung und/oder Geste aufgerufen wurde, kann ein Menü dargestellt werden, das die Einstellung von Parametern ermöglicht, in deren Abhängigkeit dann die Ansteuerung des elektronischen Rückspiegels und/oder des wenigstens einen weiteren Fahrzeugsystems erfolgen kann.

In einem Fall, in dem zwei elektronische Außen- und/oder Seitenspiegel an gegenüberliegenden Seiten des Kraftfahrzeugs vorgesehen sind, ist es wahrscheinlich, dass nur eine Anzeigevorrichtung eines elektronischen Außen- und/oder Seitenspiegels durch den Fahrer tatsächlich erreichbar ist, insbesondere bei Rechtsverkehr nur die linke. Mithin ist es in einem solchen Fall besonders vorteilhaft, wenn bei einem Außen- und/oder Seitenspiegel als elektronischer Rückspiegel nur an einem Außen- und/oder Seitenspiegel ein Touchscreen vorgesehen ist, von dem aus wenigstens ein Parameter, insbesondere eine Verschwenkung der Außenkamera und/oder ein Bildausschnitt, eines gegenüberliegenden Außen- und/oder Seitenspiegels einstellbar ist. Mithin kann beispielsweise bei Rechtsverkehr über den Touchscreen eines linken Außen- und/oder Seitenspiegels beispielsweise ein Parameter für den rechten Außen- und/oder Seitenspiegel eingestellt werden, wofür beispielsweise ein Bedienelement gegeben sein kann, das den anderen Außen- und/oder Seitenspiegel zur Konfiguration desselben und/oder eines diesem zugeordneten Fahrzeugsystems anwählt. Dabei kann beispielsweise vorgesehen sein, dass dann die Darstellung des anderen Außen- und/oder Seitenspiegels zumindest temporär übernommen wird.

Besonders vorteilhaft ist es ferner, wenn die Anzeigevorrichtung in einem Innenraum des Kraftfahrzeugs angeordnet ist. Zwar ist es grundsätzlich auch denkbar, an Außenspiegeln vorgesehene Anzeigevorrichtungen als Touchscreen auszubilden, jedoch ist bei im Inneren eines Kraftfahrzeugs angeordneten Anzeigevorrichtungen, beispielsweise bei zentralen elektronischen Rückspiegeln und/oder elektronischen Seitenspiegeln, eine bessere Erreichbarkeit und mithin eine bessere Gesamthandhabbarkeit gegeben.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine erste mögliche Darstellung auf dem Touchscreen,
- Fig. 3: eine zweite mögliche Darstellung auf dem Touchscreen,
- Fig. 4: eine dritte mögliche Darstellung auf dem Touchscreen,
- Fig. 5: eine Skizze zur Verschiebung von Zusatzinformationen,
- Fig. 6: eine erste Skizze zur Einstellung eines Bildausschnitts, und
- Fig. 7: eine zweite Skizze zur Einstellung eines Bildausschnitts.

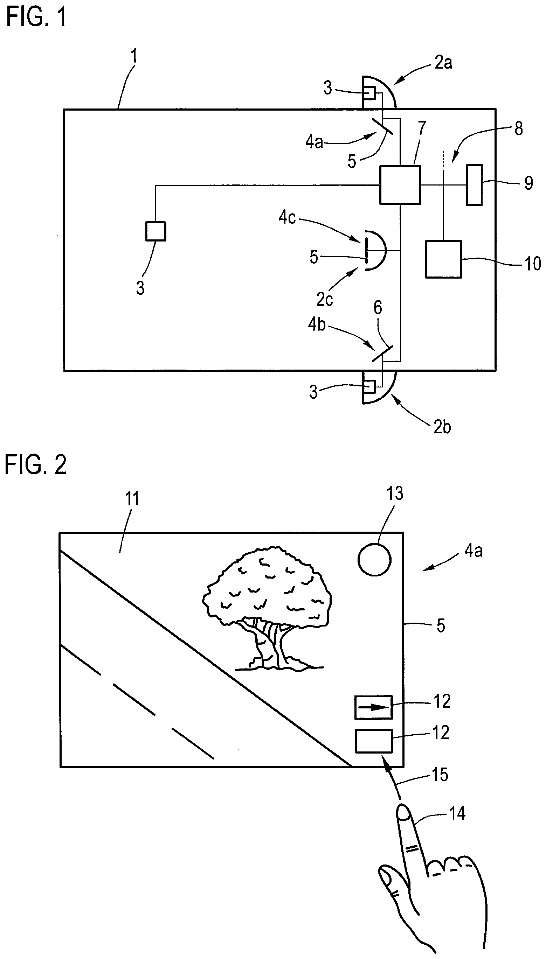

Fig. 1 zeigt eine Prinzipskizze eines Ausführungsbeispiels eines erfindungsgemäßen Kraftfahrzeugs 1. Das Kraftfahrzeug 1 weist drei elektronische Rückspiegel 2a, 2b und 2c auf. Bei den elektronischen Rückspiegeln 2a und 2b handelt es sich um Seitenspiegel. Der elektronische Rückspiegel 2c ist ein zentraler Rückspiegel des Kraftfahrzeugs 1. Jedem der elektronischen Rückspiegel 2a, 2b und 2c ist eine die äußere Umgebung des Kraftfahrzeugs 1 aufnehmende Außenkamera 3 zugeordnet, die rückwärtig orientiert ist. Die Außenkameras 3 sind dabei Weitwinkel-Kameras, die einen möglichst groeßen Ausschnitt der Umgebung aufnehmen, wobei im vorliegend dargestellten Ausführungsbeispiel nur ein Bildausschnitt des aufgenommenen Bildes tatsächlich dargestellt wird.

Die Bildausschnitte von den Bildern der Kamera können jeweils auf einer Anzeigevorrichtung 4a, 4b bzw. 4c zur Anzeige gebracht werden, wobei die Anzeigevorrichtungen 4a, 4b und 4c allesamt als Display ausgestaltet sind.

Dabei handelt es sich bei den Anzeigevorrichtungen 4a und 4c jeweils um einen Touchscreen 5, der auch multitouchfähig ist, dessen Sensorik mithin auch mehrere gleichzeitige Berührungen auflösen kann. Bei der Anzeigevorrichtung 4b handelt es sich um ein übliches Display 6.

Der Betrieb der elektronischen Rückspiegel 2a, 2b und 2c wird vorliegend zentral durch eine Steuereinrichtung 7 gesteuert, wobei jedoch auch in einem anderen Ausführungsbeispiel jedem der elektronischen Außenspiegel 2a, 2b, 2c eigene Steuereinrichtungen zugeordnet sein können. Es sei darauf hingewiesen, dass im Rahmen der vorliegenden Erfindung, insbesondere zusätzlich, eine automatische Einstellung von Bildausschnitten, ggf. situationsabhänig, erfolgen kann.

Über ein Bussystem 8, hier einen CAN-Bus, steht die Steuereinrichtung 7 auch in Kontakt mit weiteren Fahrzeugsystemen, von denen hier eine Einparkhilfe 9 und ein Spurwechselassistent 10 als Fahrerassistenzsysteme gezeigt sind, die die Anzeigevorrichtung 4a, 4b und 4c nutzen, um Warnungen und/oder Hinweise als Zusatzinformationen auszugeben, worauf im Folgenden noch näher eingegangen wird.

Die Touchscreens 5 können genutzt werden, um Einstellungen der elektronischen Außenspiegel 2a, 2b und 2c vorzunehmen, hier bezüglich des dargestellten Bildausschnitts und weiterer Darstellungsparameter, aber auch, um die die Anzeigevorrichtungen 4a, 4b, 4c mitnutzenden Fahrzeugsysteme zu konfigurieren, hier beispielsweise die Einparkhilfe 9 und den Spurwechselassistenten 10. Dabei ist der elektronische Rückspiegel 2c über seinen eigenen Touchscreen 5 konfigurierbar, die Seitenspiegel, elektronische Rückspiegel 2a und 2b, sind beide über den Touchscreen 5 des linken elektronischen Rückspiegels 2a, wobei von Rechtsverkehr ausgegangen wird, konfigurierbar. Nachdem sich die Anzeigevorrichtung 4a im Inneren des Kraftfahrzeugs 1 befindet, ist auch eine gute Erreichbarkeit des Touchscreens 5 gegeben.

Die Figuren 2 bis 4 zeigen bei dem Touchscreen 5 des linken Seitenspiegels realisierte Bedienmöglichkeiten beispielhaft auf. Wie aus Fig. 2 ersichtlich ist, ist neben dem Bildausschnitt 11 auf der Anzeigevorrichtung 4a, mithin dem Touchscreen 5, die Einblendung von Symbolen 12 gegeben, die auf Bedienmöglichkeiten hinweisen. Zudem wird durch das Spurwechselassistenzsystem 10 eine Zusatzinformation 13, hier ein Hinweis bzw. eine Warnung, ob ein Spurwechsel gefahrlos möglich ist, eingeblendet. Berührt der Fahrer mit einem Finger 14 nun eines der Symbole 12 oder die Zusatzinformation 13, öffnen sich kontextsensitiv Menüs oder Einstellmöglichkeiten. Während das obere Symbol 12 ein Umschalten auf eine Einstellbarkeit des rechten Seitenspiegels, elektronischer Rückspiegel 2b, bietet, soll nun vorliegend der Fall näher betrachtet werden, dass das Symbol 12 auf dem Touchscreen 5 durch den Finger 14 angetippt wird, vgl. Pfeil 15.

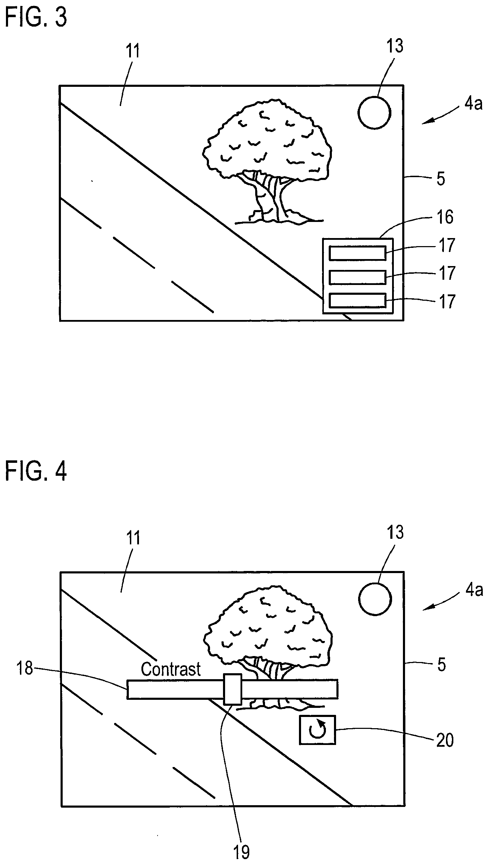

Gemäß Fig. 3 werden dann die Symbole 12 durch ein Menü 16 ersetzt, welches hier mehrere auf Darstellungsparameter bezogene Menüeinträge 17, insbesondere für Kontrast, Helligkeit und einen Farbparameter, aufweist. Wird nun beispielsweise mit dem Finger 14 der dem Kontrast zugeordnete Menüeintrag 17 angewählt, ergibt sich die Darstellung der Fig. 4, worin ein Schieberegler 18 mit dem Wort "Contrast" darüber angezeigt wird. Mit dem Finger 14 kann der Fahrer nun den auf dem Touchscreen 5 dargestellten Schieber 19 anwählen und durch links-rechts-Bewegung seines Fingers auf dem Touchscreen 5 diesen bewegen und somit den Kontrast verstellen. Über ein Bedienelement 20 kann er auch zu dem Menü 16 zurückkehren. Dabei sei an dieser Stelle darauf hingewiesen, dass immer dann, wenn keine weitere Bedienaktion erfolgt, also insbesondere keine weitere Berührung des Touchscreens 5 sensiert wird, nach einer vorbestimmten Zeitdauer wieder zur Standarddarstellung in Fig. 2 zurückgekehrt wird.

In einigen Ausführungsbeispielen ist es auch denkbar, dass durch ein Antippen des Touchscreens 5 außerhalb dargestellter Bedienelemente/Menüeinträge eine Rückkehr zur Standarddarstellung in Fig. 2 möglich ist.

Bei Berühren der Zusatzinformation 13 ergibt sich ein entsprechendes Menü, welches Einstellungen bezüglich des Spurwechselassistenten 10, also insbesondere von Betriebsparametern des Spurwechselassistenten 10, ermöglicht.

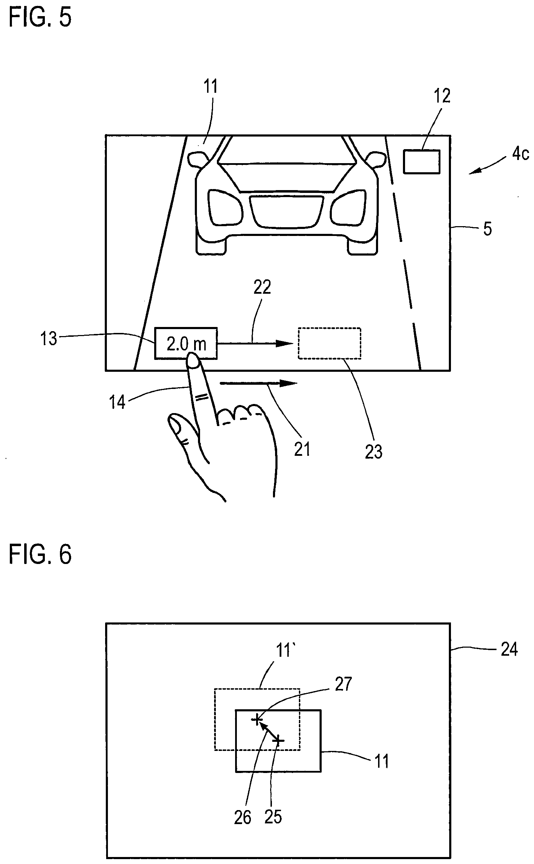

Fig. 5 zeigt nun eine mögliche Darstellung auf der Anzeigevorrichtung 4c des zentralen elektronischen Rückspiegels 2c, in der wiederum zusätzlich zu dem Bildausschnitt 11 eine Zusatzinformation 13 und ein Symbol 12 dargestellt sind. Das Symbol 12 ermöglicht auch hier die Einstellung von Darstellungsparametern, wie bereits bezüglich der Figuren 2 bis 4 beschrieben. Als Zusatzinformation 13 wird ein Abstand zu einem hinter dem Kraftfahrzeug befindlichen Objekt, hier dem darstellten weiteren Kraftfahrzeug, eingeblendet ("park distance"). Diese Zusatzinformation 13 kann mit dem Finger 14 nun angewählt werden. Wird dann der Finger 14 verschoben, Pfeil 21, wird auch die Zusatzinformation 13 gemäß des Pfeils 22 an eine neue Position 23 versetzt. Es sei darauf hingewiesen, dass selbstverständlich auch hier ein kontextsensitives Menü für die Zusatzinformation 13 realisiert werden kann, beispielsweise, indem diese doppelt innerhalb einer vorbestimmten Zeit angetippt wird.

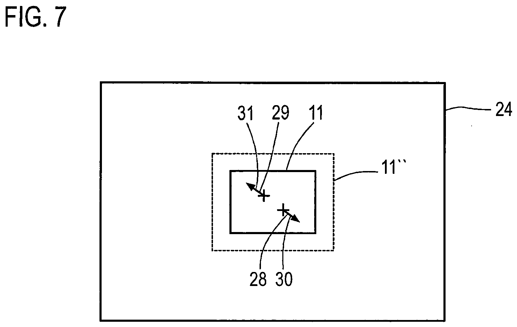

Fig. 6 und Fig. 7 zeigen in Form einer Prinzipskizze, wie der Bildausschnitt, insbesondere auch dessen Vergrößerungsstufe, gewählt werden können. Gezeigt ist in Fig. 6 der Bildausschnitt 11, also die Größe des Touchscreens, im Gesamtbild 24 der Außenkamera 3. Wird nun der Touchscreen 5, beispielsweise an einer Stelle 25, berührt, wird letztlich die Maske, die den Bildausschnitt 11 definiert, gegriffen und kann durch Bewegen des Fingers 14 über die Darstellungsfläche "gezogen" werden, vergleiche Pfeil 26. Endet der Bedienvorgang an einer Position 27, ergibt sich daraus ein neuer, dargestellter Bildausschnitt 11'.

In Fig. 7 ist die Zoomfunktion beispielhaft dargestellt. Werden Finger 14 an den Positionen 28, 29 aufgesetzt und dann gemäß der Pfeile 30, 31 auseinandergezogen, ergibt dies eine Geste, die die Maske, die den Bildausschnitt 11 definiert, vergrößert. Es ergibt sich ein "Herauszoomen", vergleiche den Bildausschnitt 11".

Auch komplexere Gesten lassen sich im Rahmen der vorliegenden Erfindung durchführen und zur Bedienung nutzen.

## Patentansprüche

1. Kraftfahrzeug (1), umfassend wenigstens einen elektronischen Rückspiegel (2a, 2b, 2c), insbesondere einen Außen- und/oder Seitenspiegel, der eine Anzeigevorrichtung (4a, 4b, 4c), insbesondere ein Display, für von einer insbesondere außerhalb des Kraftfahrzeugs (1) vorgesehenen Außenkamera (3) aufgenommene Bilder (24) aufweist, wobei die Anzeigevorrichtung (4a, 4b, 4c) als ein insbesondere multitouchfähiger Touchscreen (5) zur Einstellung einer Verschwenkung der Außenkamera (3) und/oder eines anzuzeigenden Bildausschnitts (11, 11', 11") des Bildes (24) ausgebildet ist,
**dadurch gekennzeichnet, dass** die Anzeigevorrichtung (4a, 4b, 4c) dazu ausgebildet ist, dass nur der Bildausschnitt (11, 11', 11") des Bildes (24) auf dem Touchscreen (5) dargestellt wird und der Bildausschnitt (11, 11', 11") als der Größe des Touchscreens (5) entsprechende Maske innerhalb des Bildes (24) durch Berühren des Touchscreens (5) an einer Stelle und berührendes Bewegen eines Fingers (14) verschiebbar ist.

2. Kraftfahrzeug nach Anspruch 1, **dadurch gekennzeichnet, dass** eine Steuereinrichtung (7) zur Steuerung des elektronischen Rückspiegels (2a, 2b, 2c), insbesondere einer Verschwenkungseinrichtung der Außenkamera (3) und/oder einer Bildverarbeitungseinrichtung zur Auswahl des darzustellenden Bildausschnitts (11, 11', 11 "), in Abhängigkeit einer über den Touchscreen (5) erfolgten Eingabe vorgesehen ist.

3. Kraftfahrzeug nach Anspruch 2, **dadurch gekennzeichnet, dass** zusätzlich wenigstens ein Darstellungsparameter der Anzeigevorrichtung (4a, 4b, 4c), insbesondere die Helligkeit und/oder der Kontrast und/oder ein Farbparameter, über den Touchscreen (5) einstellbar ist.

4. Kraftfahrzeug nach Anspruch 3, **dadurch gekennzeichnet, dass** die Steuereinrichtung (7) zur Einblendung eines Schiebereglers (18) für den Darstellungsparameter auf der Anzeigevorrichtung (4a, 4b, 4c) ausgebildet ist.

5. Kraftfahrzeug nach einem der Ansprüche 2 bis 4, **dadurch gekennzeichnet, dass** zusätzlich wenigstens ein Betriebsparameter wenigstens eines die Anzeigevorrichtung (4a, 4b, 4c) zur Ausgabe einer Information und/oder Warnung nutzenden Fahrzeugsystems, insbesondere Fahrerassistenzsystems, in Abhängigkeit einer Eingabe auf dem Touchscreen (5) einstellbar ist.

6. Kraftfahrzeug nach Anspruch 5, **dadurch gekennzeichnet, dass** als Fahrerassistenzsystem ein Spurwechselassistenzsystem (10) und/oder ein Totwinkelassistenzsystem und/oder eine Einparkhilfe (9) und/oder ein Rückwärtsfahrtassistenzsystem vorgesehen ist.

7. Kraftfahrzeug nach einem der Ansprüche 2 bis 6, **dadurch gekennzeichnet, dass** zusätzlich wenigstens eine in das Bild eingeblendete, auf der Anzeigevorrichtung (4a, 4b, 4c) dargestellte Zusatzinformation (13) durch Interaktion am Darstellungsort der Zusatzinformation (13) in der Darstellung konfigurierbar ist, insbesondere verschiebbar ist.

8. Kraftfahrzeug nach einem der Ansprüche 2 bis 7, **dadurch gekennzeichnet, dass** die Steuereinrichtung (7) zur Darstellung wenigstens eines insbesondere kontextsensitiven, durch den Touchscreen (5) bedienbaren Menüs (16) auf der Anzeigevorrichtung (4a, 4b, 4c) ausgebildet ist.

9. Kraftfahrzeug nach einem der Ansprüche 2 bis 8, **dadurch gekennzeichnet, dass** bei einem Außen- und/oder Seitenspiegel als elektronischer Rückspiegel (2a, 2b, 2c) nur an einem Außen- und/oder Seitenspiegel ein Touchscreen (5) vorgesehen ist, von dem aus wenigstens ein Parameter, insbesondere eine Verschwenkung der Außenkamera (3) und/oder ein Bildausschnitt (11, 11', 11 "), eines gegenüberliegenden Außen- und/oder Seitenspiegels einstellbar ist.

10. Kraftfahrzeug nach einem der vorangehenden Ansprüche, **dadurch gekennzeichnet, dass** die Anzeigevorrichtung (4a, 4b, 4c) in einem Innenraum des Kraftfahrzeugs (1) angeordnet ist.

11. Kraftfahrzeug nach einem der vorangehenden Ansprüche, **dadurch gekennzeichnet, dass** eine Vergrößerungsstufe des Bildausschnitts (11, 11', 11") durch Ansetzen zweier Finger (14) auf dem Touchscreen (5) und eine Veränderung des Abstands der Finger (14) während der Berührung einstellbar ist.

## Claims

1. Motor vehicle (1), comprising at least one electronic rear-view mirror (2a, 2b, 2c), in particular an exterior rear-view mirror and/or wing mirror, which has a display device (4a, 4b, 4c), in particular a display, for images (24) taken by an external camera (3) provided outside the motor vehicle (1), wherein the display device (4a, 4b, 4c) is designed as an in particular multi-touch capable touch screen (5) for adjusting a pivoting of the external camera (3) and/or an image section (11, 11', 11") of the image (24) to be displayed, **characterised in that** the display device (4a, 4b, 4c) is designed such that only the image section (11, 11', 11") of the image (24) is displayed on the touch screen (5) and the image section (11, 11', 11") as a mask within the image (24) corresponding to the size of the touch screen (5) can be moved by touching the touch screen (5) with a finger (14) in one place and performing a dragging movement.

2. Motor vehicle according to claim 1, **characterised in that** a control device (7) is provided for controlling the electronic rear-view mirror (2a, 2b, 2c), in particular a pivoting device of the external camera (3) and/or an image processing device for selecting the image section (11, 11', 11") to be displayed, dependent on an input made via the touch screen (5).

3. Motor vehicle according to claim 2, **characterised in that** additionally at least one display parameter of the display device (4a, 4b, 4c), in particular the brightness and/or the contrast and/or a colour parameter, are adjustable via the touch screen (5).

4. Motor vehicle according to claim 3, **characterised in that** the control device (7) is designed to superimpose a slider bar (18) for the display parameter on the display device (4a, 4b, 4c).

5. Motor vehicle according to any one of claims 2 to 4, **characterised in that** additionally at least one operating parameter of at least one vehicle system using the display device (4a, 4b, 4c) for outputting an item of information and/or a warning, in particular a driver assistance system, is adjustable dependent on an input on the touch screen (5).

6. Motor vehicle according to claim 5, **characterised in that** a lane change assistance system (10) and/or a blind spot assistance system and/or parking assistance (9) and/or a reversing assistance system is provided as the driver assistance system.

7. Motor vehicle according to any one of claims 2 to 6, **characterised in that** additionally at least one item of additional information (13) superimposed into the image and displayed on the display device (4a, 4b, 4c) can be configured, in particular can be moved, by interaction at the display location of the additional information (13) in the display.

8. Motor vehicle according to any one of claims 2 to 7, **characterised in that** the control device (7) is designed to display on the display device (4a, 4b, 4c) at least one in particular context-sensitive menu (16) which can be activated by the touch screen (5).

9. Motor vehicle according to any one of claims 2 to 8, **characterised in that** in the case of an exterior rear-view mirror and/or wing mirror as the electronic rear-view mirror (2a, 2b, 2c), a touch screen (5) is only provided on one exterior rear-view mirror and/or wing mirror, from which at least one parameter, in particular a pivoting of the external camera (3) and/or an image section (11, 11', 11"), of an opposite exterior rear-view mirror and/or wing mirror can be adjusted.

10. Motor vehicle according to any one of the preceding claims, **characterised in that** the display device (4a, 4b, 4c) is arranged in an interior part of the motor vehicle (1).

11. Motor vehicle according to any one of the preceding claims, **characterised in that** a zoom level of the image section (11, 11', 11") is adjustable by positioning two fingers (14) on the touch screen (5) and changing the distance between the fingers (14) whilst touching.

## Revendications

1. Véhicule automobile (1), comprenant au moins un rétroviseur électronique (2a, 2b, 2c), notamment un rétroviseur extérieur et/ou latéral, qui comporte un dispositif d'affichage (4a, 4b, 4c), notamment un écran, pour des images (24) enregistrées par une caméra extérieure (3) prévue notamment à l'extérieur du véhicule automobile (1), le dispositif d'affichage (4a, 4b, 4c) étant conçu comme un écran tactile (5), notamment multipoint, pour le réglage d'un pivotement de la caméra extérieure (3) et/ou d'un extrait d'image à afficher (11, 11', 11") de l'image (24),
**caractérisé en ce que** le dispositif d'affichage (4a, 4b, 4c) est conçu pour que seul l'extrait d'image (11, 11', 11") de l'image (24) soit affiché sur l'écran tactile (5) et pour que l'extrait d'image (11, 11', 11") en tant que masque, correspondant à la dimension de l'écran tactile (5), à l'intérieur de l'image (24) soit déplaçable en touchant l'écran tactile (5) à un endroit et en glissant un doigt (14).

2. Véhicule automobile selon la revendication 1, **caractérisé en ce qu'**il est prévu un dispositif de commande (7) pour la commande du rétroviseur électronique (2a, 2b, 2c), notamment d'un dispositif de pivotement de la caméra extérieure (3) et/ou d'un dispositif de traitement d'image pour la sélection de l'extrait d'image (11, 11', 11") à représenter, en fonction d'une entrée effectuée sur l'écran tactile (5).

3. Véhicule automobile selon la revendication 2, **caractérisé en ce que**, en outre, au moins un paramètre de représentation du dispositif d'affichage (4a, 4b, 4c), notamment la luminosité et/ou le contraste et/ou un paramètre de couleur, est réglable sur l'écran tactile (5).

4. Véhicule automobile selon la revendication 3, **caractérisé en ce que** le dispositif de commande (7) est conçu pour l'insertion d'un curseur de réglage (18) pour le paramètre de représentation sur le dispositif d'affichage (4a, 4b, 4c).

5. Véhicule automobile selon l'une quelconque des revendications 2 à 4, **caractérisé en ce que**, en outre, au moins un paramètre de fonctionnement d'au moins un système de véhicule utilisant le dispositif d'affichage (4a, 4b, 4c) pour la sortie d'une information et/ou d'un avertissement, notamment d'un système d'assistance au conducteur, est réglable en fonction d'une entrée sur l'écran tactile (5).

6. Véhicule automobile selon la revendication 5, **caractérisé en ce que**, comme système d'assistance au conducteur, il est prévu un système d'assistance pour le changement de file (10) et/ou un système d'assistance pour l'angle mort et/ou une aide au stationnement (9) et/ou un système d'assistance à la conduite en marche arrière.

7. Véhicule automobile selon l'une quelconque des revendications 2 à 6, **caractérisé en ce que**, en outre, au moins une information supplémentaire (13) représentée sur le dispositif d'affichage (4a, 4b, 4c) et insérée dans l'image est configurable, notamment déplaçable, par interaction au point de représentation de l'information supplémentaire (13) dans la représentation.

8. Véhicule automobile selon l'une quelconque des revendications 2 à 7, **caractérisé en ce que** le dispositif de commande (7) est conçu pour représenter sur le dispositif d'affichage (4a, 4b, 4c) au moins un menu (16) notamment adapté au contexte et commandable sur l'écran tactile (5).

9. Véhicule automobile selon l'une quelconque des revendications 2 à 8, **caractérisé en ce que**, dans le cas d'un rétroviseur extérieur et/ou latéral comme rétroviseur électronique (2a, 2b, 2c), il est prévu seulement sur un rétroviseur extérieur et/ou latéral un écran tactile (5) à partir duquel au moins un paramètre, notamment un pivotement de la caméra extérieure (3) et/ou un extrait d'image (11, 11', 11"), d'un rétroviseur extérieur et/ou latéral situé du côté opposé est réglable.

10. Véhicule automobile selon l'une quelconque des revendications précédentes, **caractérisé en ce que** le dispositif d'affichage (4a, 4b, 4c) est agencé dans un habitacle du véhicule automobile (1).

11. Véhicule automobile selon l'une quelconque des revendications précédentes, **caractérisé en ce qu'**un niveau d'agrandissement de l'extrait d'image (11, 11', 11") est réglable en posant deux doigts (14) sur l'écran tactile (5) et en modifiant l'écartement des doigts (14) pendant le contact.
